# EUROPEAN PATENT SPECIFICATION

(11) **EP 3 528 547 B1**
(45) Date of publication and mention of the grant of the patent: **29.09.2021**
(21) Application number: 17868122.7
(22) Date of filing: 02.11.2017
(51) Int. Cl.: H04W 48/10, H04L 5/00, H04W 72/04

(54) **METHOD FOR TRANSMITTING DATA, TERMINAL DEVICE AND NETWORK DEVICE**
VERFAHREN ZUR ÜBERTRAGUNG VON DATEN, ENDGERÄTEVORRICHTUNG UND NETZWERKVORRICHTUNG
PROCÉDÉ DE TRANSMISSION DE DONNÉES, DISPOSITIF TERMINAL ET DISPOSITIF DE RÉSEAU

(30) Priority: 04.11.2016 CN 201610962171
(43) Date of publication of application: 21.08.2019
(73) Proprietor: Huawei Technologies Co., Ltd., Longgang District Shenzhen, Guangdong 518129 (CN)
(72) Inventor: YOU, Chunhua, Shenzhen Guangdong 518129 (CN)
(74) Representative: Pfenning, Meinig & Partner mbB
(86) International application number: PCT/CN2017/109030
(87) International publication number: WO 2018/082589

(56) References cited:
- CN-A- 105 657 835
- CN-A- 105 659 659
- CN-A- 105 848 165
- CN-A- 105 981 458
- US-A1- 2015 009 910
- US-A1- 2016 212 735
- NEC: "Discussion on initial access and mobility for NR standalone cell", 3GPP DRAFT; R1-166639 INITIAL ACCESS AND MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140317, Retrieved from the Internet: URL:http://www.3gpp.org/ftp/Meetings_3GPP_ SYNC/RAN1/Docs/ [retrieved on 2016-08-21]
- INTEL CORPORATION: "System information for standalone NR deployment", 3GPP DRAFT; R2-165007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126648, Retrieved from the Internet: URL:http://www.3gpp.org/ftp/Meetings_3GPP_ SYNC/RAN2/Docs/ [retrieved on 2016-08-21]

## Description

### TECHNICAL FIELD

This application relates to the field of communications technologies, and more specifically, to a data transmission method, a terminal device, and a network device.

### BACKGROUND

In a Long Term Evolution (Long Term Evolution, LTE) system, to access an LTE network, a terminal device needs to perform processes such as cell search, cell system information (System Information, SI) obtaining, and random access. Objectives of the cell search include: (1) achieving frequency and symbol synchronization with a cell; (2) obtaining a timing of a downlink frame, in other words, a start location of the downlink frame; and (3) determining a physical cell identifier (Physical-layer Cell Identifier, PCI) of the cell. After performing the cell search, the terminal device needs to obtain SI of the cell. The SI includes a set of parameters related to a specific function or some functions.

In LTE, three types of Radio Resource Control (Radio Resource Control, RRC) messages may be used to transmit system information SI, namely, a master information block (Master Information Block, MIB) message, a system information block (System Information Block, SIB) SIB 1 message, and other SIB messages.

In a future 5G system, more service types emerge, and service types supported by a cell increase accordingly. However, in the prior art, system information is periodically broadcast (specifically, for example, locations and periods of a MIB and a SIB 1 are fixed in time domain, and locations and periods of other SIBs in time domain are specified by the SIB 1). Consequently, the system information cannot be flexibly sent, and a cell service cannot be adapted to in real time. In this case, a new solution needs to be provided urgently.

Document NEC, "Discussion on initial access and mobility for NR standalone cell", vol. RAN WG1, no. Gothenburg, Sweden; 20160822 - 20160826, (20160821), 3GPP DRAFT; R1-166639 INITIAL ACCESS AND MOBILITY, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20160821), XP051140317 describes a concept for transmitting system information based on user equipment request.

US 2015/009910 A1 describes a method for allocating resources in Device-to-Device (D2D) communication in a wireless network. The method includes requesting, by a device, resource allocation from an enhanced Node B (eNB) and causing the device to be allocated, from the eNB, a Resource Block (RB) for transmitting one of D2D discovery and communication data and control information. The RB includes information about a location of the resource-allocated time or frequency.

Document INTEL CORPORATION, "System information for standalone NR deployment", vol. RAN WG2, no. Gothenburg, Sweden; 20160822 - 20160826, (20160821), 3GPP DRAFT; R2-165007, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN2/Docs/, (20160821), XP051126648 describes a concept for on-demand provisioning of system information.

### SUMMARY

The present invention is set out in the independent claims whereas preferred embodiments and further implementations are outlined in the dependent claims, description and figures.

### BRIEF DESCRIPTION OF DRAWINGS

FIG. 1 is a schematic diagram of an application scenario;
FIG. 2 is a schematic flowchart of a data transmission method according to an embodiment of the present invention;
FIG. 3 is a schematic flowchart of a data transmission method according to another embodiment of the present invention;
FIG. 4 is a schematic block diagram of a terminal device according to an embodiment of the present invention;
FIG. 5 is a schematic block diagram of a network device according to an embodiment of the present invention;
FIG. 6 is a structural block diagram of a terminal device according to an embodiment of the present invention; and
FIG. 7 is a structural block diagram of a network device according to an embodiment of the present invention.

### DESCRIPTION OF EMBODIMENTS

The invention is defined by the appended claims.

It should be understood that technical solutions of the embodiments of the present invention may be applied to various communications systems, such as a Long Term Evolution (Long Term Evolution, LTE) system, an LTE frequency division duplex (Frequency Division Duplex, FDD) system, LTE time division duplex (Time Division Duplex, TDD) system, a Universal Mobile Telecommunication System (Universal Mobile Telecommunication System, UMTS), and a future 5G communications system such as a new radio (New Radio, NR) wireless system.

It should be further understood that in the embodiments of the present invention, a terminal device may communicate with one or more core networks through a radio access network (Radio Access Network, RAN). The terminal device may be referred to as an access terminal, a terminal device, a subscriber unit, a subscriber station, a mobile station, a mobile console, a remote station, a remote terminal, a mobile device, a user terminal, a terminal, a wireless communications device, a user agent, or a user apparatus. User equipment may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, or a terminal device in a future 5G network.

It should be further understood that in the embodiments of the present invention, a network device may be configured to communicate with user equipment. The network device may be a base transceiver station (Base Transceiver Station, BTS) in a GSM system or in CDMA, or may be a NodeB (NodeB, NB) in a WCDMA system, or may be an evolved NodeB (Evolved NodeB, eNB or eNodeB) in an LTE system. Alternatively, the network device may be a relay station, an access point, an in-vehicle device, a wearable device, a base station device in the future 5G network, or the like.

It should be further understood that the embodiments of the present invention may be applied to an unlicensed cell. The cell can work independently without relying on another cell, or can work normally only by relying on a licensed cell, for example, a licensed-assisted access (Licensed-Assisted Access, LAA) cell. For example, an unlicensed spectrum of an operator may be specifically a spectrum used by a wireless local area network (Wireless Local Area Network, WLAN). A network device or a terminal device in an unlicensed cell needs to perform an idle channel detection mechanism such as a listen before talk (Listen Before Talk, LBT) mechanism, and an occupancy time of an unlicensed channel of the unlicensed cell is also limited. In the embodiments of the present invention, the systems are collectively referred to as an LAA system, and the system may include an unlicensed cell that can work independently. However, the system may have another name. This is not limited in the embodiments of the present invention.

In a cellular network, a network device (for example, a base station or a base station controller) and a terminal device may communicate by using a licensed carrier or an unlicensed carrier. Before transmitting data by using the unlicensed carrier, the network device or the terminal device may contend with a node in a WLAN and another LAA node in the cellular network that uses an LAA mechanism for a resource on the unlicensed carrier, and transmit the data after obtaining the resource through contention. The terminal device or the network device may contend for a channel based on a load-based (Load Based Equipment, LBE) channel detection mechanism or based on a frame structure-based (Frame Based Equipment, FBE) channel detection mechanism. This is not limited in the embodiments of the present invention.

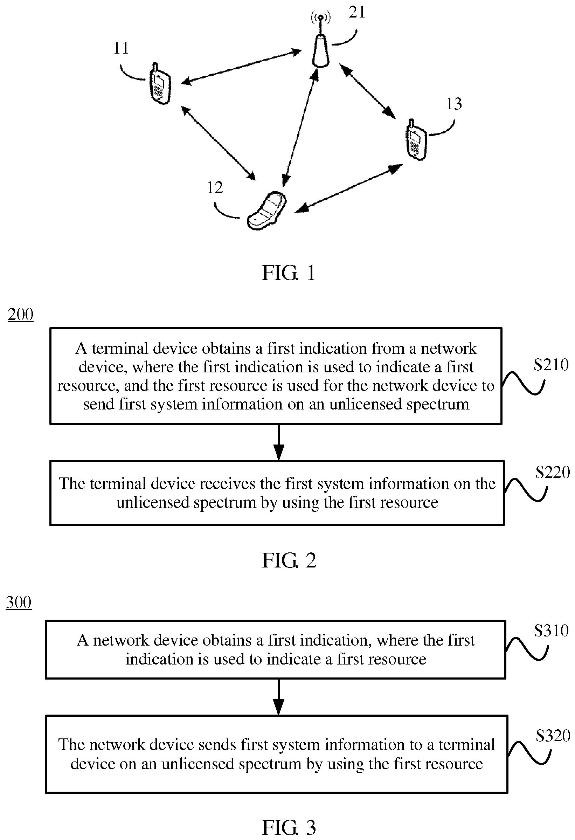

FIG. 1 is a schematic diagram of a scenario. It should be understood that for ease of understanding, the scenario in FIG. 1 is introduced for description herein. However, this constitutes no limitation on the present invention. FIG. 1 shows a terminal device 11, a terminal device 12, a terminal device 13, and a base station 21.

As shown in FIG. 1, the terminal device 11 may communicate with the base station 21, the terminal device 12 may communicate with the base station 21, and the terminal device 13 communicates with the base station 21. Alternatively, the terminal device 12 may communicate with the terminal device 11. Alternatively, in another case, the terminal device 13 communicates with the base station 12. The terminal devices and the base station in FIG. 1 may be applied to an LAA system.

In LTE, locations and periods of a master information block (Master Information Block, MIB) message and a system information block (System Information Block, SIB) 1 message that are received by a terminal device are fixed in time domain, and locations and periods of other system information (System Information, SI) in time domain are specified by the SIB 1. In other words, in the prior art, a system message is periodically broadcast, and consequently it is not flexible enough, and a cell service change cannot be adapted to. Further, for a specific type of cell such as an unlicensed (Unlicensed) cell, before sending system information, a network device needs to detect whether a channel is in an idle or a busy mode (in other words, to perform clear channel assessment). If the channel is in the busy mode at a determined time domain location, the network device cannot send the system information, but can only wait for a next system message period for sending. Consequently, service experience of the terminal device is affected. Therefore, the present invention attempts to provide a data transmission method. A first indication is added, system information is received on a first resource indicated by the first indication, and the system information may be sent at any time domain location after a channel is obtained, so that the system information can be flexibly broadcast, thereby adapting to a cell service in real time and fully using a transmit opportunity.

FIG. 2 is a schematic flowchart of a data transmission method 200 according to an embodiment of the present invention. The method may be performed by a terminal device such as any terminal device in FIG. 1. The method 200 includes the following steps.

S210. The terminal device obtains a first indication from a network device, where the first indication is used to indicate a first resource, and the first resource is used by the network device to send first system information on an unlicensed spectrum.

Optionally, the first indication may be a common indication channel, and the common indication channel is a channel that can be read by all terminal devices in a serving cell (specifically, for example, a specific terminal device or some terminal device groups in a serving cell). For example, the terminal device may obtain the first resource by reading the common indication channel.

Optionally, the first resource may be a time-frequency resource or a time domain resource.

Optionally, an offset between a time unit (for example, a time domain location or a time domain resource unit) corresponding to the first indication and a time unit corresponding to the first system information is an integer greater than or equal to 0. The time unit may be time domain information such as a time domain location, a subframe, a slot (slot), a mini-slot, or an orthogonal frequency division multiplexing (Orthogonal Frequency Division Multiplexing, OFDM) symbol. This is not limited. For example, the first resource is an SI subframe. Herein, the "SI subframe" is a subframe used to send SI. Certainly, in addition to an SI message, the SI subframe may be further used to send any other type of data. This is not limited. For example, a subframe corresponding to the first indication and a subframe corresponding to the first system information may be a same subframe, or may be different subframes. Optionally, an interval between a length of the time unit corresponding to the first indication and a length of the time unit corresponding to the first system information may be configured by the network device.

In this embodiment of the present invention, when the offset between the time unit corresponding to the first indication and the time unit corresponding to the first system information is 0, it indicates that the first indication and the first system information are in a same time unit (for example, in a same subframe or on a same symbol). In this case, the first indication and the first system information may be in different frequency domains or code domains.

In this embodiment of the present invention, the first system information may be system information for a specific type of cell. For example, a time domain frequency of this type of cell is 2.4GHz-2.5 GHz, 5-6 GHz, 50-70 GHz, 35-36 GHz, or the like. Alternatively, this type of cell is a cell in which clear channel assessment needs to be performed before data is sent, for example, an unlicensed unlicensed cell.

Optionally, the first indication and the first system information may be transmitted at a same transmit opportunity (Transmission Opportunity, TXOP). Alternatively, the first indication and the system information may be transmitted at different TXOPs. The transmit opportunity is an occupancy time after the network device or the terminal device obtains the channel through idle channel detection.

Optionally, if the first indication and the first system information are transmitted at different TXOPs, the network device may indicate a quantity of transmit opportunities between the first indication and the first system information.

Optionally, the first indication may further indicate first information, and the first information is used to notify the terminal device that the first system information expected or required by the terminal device exists.

Optionally, during specific implementation, the first information may be indicated by using a computer language (for example, Bool (Bool)), or may be indicated by using a system information block list SIB list. For example, when Bool is 0, it indicates that the first system information does not include system information required by the terminal device. When Bool is 1, it indicates that the first system information includes system information required by the terminal device. Alternatively, for the SIB list, if system information expected by the terminal device is a SIB 1, and the SIB list includes the SIB 1, it indicates that the system information includes the system information required by the terminal device. On the contrary, if the SIB list does not include the SIB 1, it indicates that the system information does not include the system information required by the terminal device.

It should be understood that the first information has different content or is indicated in many manners. The foregoing examples are merely used to facilitate understanding of functions of the first information. A specific form of the first information is not limited in the present invention.

Optionally, a mapping relationship between the first information and the first system information may be preset in a protocol. For example, it is specified in the protocol that when Bool of the first information is 1, it indicates that the first system information includes system information required by the terminal device. Optionally, the first indication may further indicate more information such as second information, and the second information may indicate that when Bool is 0, the first system information does not include system information required by the terminal device. This is not limited.

In this embodiment of the present invention, the first indication may further indicate a type of the system information. The type may include common (common) SI and service SI, or on-demand broadcast SI and non-on-demand broadcast SI. For example, the system information may include the common (common) SI and the service SI. The common SI is SI shared by all services, and is a most basic SI parameter set of a cell. The service SI may be used for a specific type of service. For example, the service SI may specifically include machine type communication (Machine Type Communication, MTC) SI, ultra-reliable and low latency communications (Ultra Reliable and Low Latency Communications, URLLC) SI, mobile broadband (Mobile Broadband, MBB) SI, and the like.

Optionally, the common SI may be sent by using a preset modulation and coding scheme or a preset time-frequency resource, or may be sent through dynamic scheduling. Specifically, a modulation and coding scheme, a time-frequency resource, and the like are learned of by listening to a downlink control channel. The downlink control channel may appear in one subframe at least once. Optionally, common SIBs x (where x indicates a number of any SIB) in the common SI may be distinguished from each other by using different radio network temporary identifiers (Radio Network Temporary Identity, RNTI). For example, the common SI may be received by using one uniform RNTI, and then different common SIBs x are distinguished from each other by using a Medium Access Control (Medium Access Control, MAC) layer or a radio resource control (Radio Resource Control, RRC) layer. An association or a relationship between a logical channel number of the MAC layer and a service common SIB x may be pre-specified in the protocol.

For example, during specific implementation, the service SI is sent through dynamic scheduling. Specifically, a modulation and coding scheme, a time-frequency resource, and the like are learned of by listening to a downlink control channel, and the SI may be received by using one uniform RNTI. Then, different pieces of service SI are distinguished from each other by using a MAC layer. An association or a relationship between a logical channel number of the MAC layer and the service SI may be pre-specified in the protocol. For another example, different pieces of service SI may be distinguished from each other by using different RNTIs, in other words, the different pieces of service SI are distinguished from each other by using different scrambling identifiers. The terminal device may descramble the RNTIs as required, to obtain expected SI. RNTIs of different services may be specified in the protocol, or may be indicated by the common SI.

Optionally, the first indication (which is, for example, carried on the common indication channel) may further indicate a type of a set that is corresponding to the service SI and that implements a particular function, to reduce complexity that the terminal device obtains the SI. Before S210, the method 200 may further include:
obtaining, by the terminal device, a synchronization signal, where the synchronization signal is sent by the network device in any time unit, and the synchronization signal is used by the terminal device to perform downlink synchronization.

Specifically, the terminal device may obtain a downlink synchronization signal sent by the network device, to perform downlink synchronization or OFDM symbol synchronization. The time unit may be a subframe, a transmission interval, a scheduling granularity unit, or an OFDM symbol. For example, the synchronization signal may be sent in any downlink subframe. However, in the prior art, a synchronization signal can be sent only in a subframe 0 and a subframe 5. In this case, compared with the prior art, a synchronization signal sending mechanism in this embodiment of the present invention is more flexible.

Herein, the synchronization signal may include a primary synchronization signal (Primary Synchronization Signal, PSS) and a secondary synchronization signal (Secondary Synchronization Signal, SSS).

S220. The terminal device receives the first system information on the unlicensed spectrum by using the first resource.

Specifically, the terminal device may obtain the first indication. The first indication is used to indicate the first resource, and the first resource is used by the network device to send the first system information on the unlicensed spectrum. Then, the terminal device may receive the first system information on the unlicensed spectrum by using the first resource. Therefore, unlike the prior art in which system information can be sent based only on a fixed period, the system information can be flexibly broadcast, so as to adapt to a cell service in real time, fully use a transmit opportunity, and improve system information broadcast reliability.

Optionally, in this embodiment of the present invention, the first indication may be sent by the network device by using a parameter preconfigured in a protocol. The parameter preconfigured in the protocol can be learned of by both the network device and the terminal device, and specifically, includes at least one of a preset modulation and coding scheme, a preset time-frequency domain resource location, and a preset subcarrier spacing type. Alternatively, the first indication may be sent by the network device by using at least one of a dynamic modulation and coding scheme and a dynamic time-frequency domain resource location. The terminal device may receive at least one first indication in one subframe. For an unlicensed cell, before sending the first indication, the network device needs to obtain a channel (channel), which may be construed as a case in which the network device detects that the channel is in an idle mode.

For example, the first system information may be sent at a preset time-frequency domain resource location in a subframe by using a preset modulation and coding scheme. For example, a MIB may be sent through a physical broadcast channel (Physical Broadcast Channel, PBCH). Alternatively, the first system information (for example, the common SI) may be obtained in a downlink subframe through dynamic scheduling. For example, the terminal device reads downlink control information (Downlink Control Information, DCI) signaling, to obtain a time-frequency domain resource location of the common SI and a to-be-used modulation and coding scheme. Alternatively, the common SIB x may be sent through a physical downlink shared channel (Physical Downlink Shared Channel, PDSCH).

Optionally, in this embodiment of the present invention, the first system information includes at least one piece of the following information:
downlink bandwidth information of a serving cell, a quantity of types of at least one subcarrier spacing in the serving cell, information about a bandwidth occupied by each of the at least one subcarrier spacing (including at least one of uplink bandwidth information and downlink bandwidth information), system frame number information, configuration information used by the terminal device to perform cell selection (for example, information such as a cell camping threshold or signal quality strength), configuration information used by the terminal device to perform random access (for example, information such as a preamble root sequence, a total preamble quantity, a quantity of preamble transmission times, a preamble transmit power configuration parameter, or a random access response message window length), a cell list (cell list) of the first system information, service system information, a cell duplex mode, an uplink multiple access mode, channel coding mode information, slot (slot) type information, transmission time interval (Transmission Time Interval, TTI) length information. The service system information notifies the terminal device of a used Radio Link Control layer processing manner such as an acknowledged (Acknowledgement Mode, AM) mode or an unacknowledged (Unacknowledgement Mode, UM) mode. The service may be a particular type of service such as MBB, MTC, URLLC, or a disaster notification service. The cell list may also be referred to as an effective area, and it means that all cells in the cell list can use the first system information.

For example, the common SI may indicate at least one piece of the following information: a downlink broadband of a cell, a total quantity of basic parameter sets (numerology) supported by the cell, a bandwidth of a subband corresponding to each numerology, a numerology corresponding to each piece of service SI, a system frame number (System Frame Number, SFN), configuration information related to cell selection (for example, information such as a cell camping threshold or signal quality strength), a configuration related to random access (for example, information such as a preamble root sequence, a total preamble quantity, a quantity of preamble transmission times, a preamble transmit power configuration parameter, or a random access response message window length), information about an effective subframe area, SI of a particular service, and the like. The numerology may be determined by at least one of a subcarrier spacing and a symbol (symbol) length. Numerologies of a cell may be time division multiplexing and/or frequency division multiplexing.

It should be understood that the foregoing descriptions merely illustrate some information that may be included in the first system information, and constitute no limitation on the present invention. During specific implementation, the first system information may also include other proper information. This is not limited.

Therefore, according to the data transmission method in this embodiment of the present invention, the terminal device obtains the first indication. The first indication is used to indicate the first resource, and the first resource is used by the network device to send the first system information on the unlicensed spectrum. Then, the terminal device receives the first system information on the unlicensed spectrum by using the first resource. Therefore, the system information can be flexibly broadcast, so as to adapt to a cell service in real time.

Optionally, in an embodiment, the method 200 may further include:
sending, by the terminal device, request information to the network device, where the request information is used to request the first system information.

S220 may include:
receiving, on the first resource, the first system information sent by the network device based on the request information.

Specifically, the terminal device may send the request information to the network device, to request the required SI. For example, the terminal device requests the required SI from the network device with reference to a current service requirement. The network device may respond to the request of the terminal device, and send the SI to the terminal device. The terminal device may receive, by using a particular RNTI, service SI to which the network device responds. The RNTI may be associated with a resource used by the request information, or may be associated with a service. Therefore, the terminal device may actively initiate a request to the network device, to obtain the expected system information. If the terminal device does not obtain the expected system information after initiating a plurality of requests, the terminal device performs a cell reselection process. A maximum quantity of transmit times of the system message request is pre-specified in the protocol. Optionally, the request message may be a preamble sequence.

Optionally, in an embodiment, the method 200 may further include:
receiving, by the terminal device, a physical channel, where the physical channel is used to indicate whether a transmission resource of downlink data includes at least one of a synchronization signal and second system information; and
receiving, based on whether the transmission resource includes the at least one of the synchronization signal and the second system information, downlink data sent by the network device. The downlink data includes at least one of a paging message, a system message, a random access response message, a dedicated unicast message, and a multimedia broadcast/multicast service (Multimedia Broadcast Multicast Service, MBMS) message.

Optionally, the terminal device receives the physical channel, and the physical channel may be further used to indicate a start time unit and duration of at least one subcarrier spacing type. The time unit may be any one of a subframe, an OFDM symbol, a slot length, and a transmission time interval length. If the terminal device cannot use the subcarrier type indicated by the network device, the terminal device does not expect to receive any signal or does not blindly detect a downlink control channel within the duration of the subcarrier type indicated by the network device, so as to achieve power saving. Optionally, the physical channel is sent by using a preset subcarrier spacing type. Optionally, a sending period and a time domain location of the physical channel is notified by a physical device to the terminal device by using a unicast or broadcast message.

In this embodiment of the present invention, the terminal device may receive the physical channel. The physical channel includes a physical downlink control channel (Physical Downlink Control Channel, PDCCH) and a physical downlink shared channel (Physical Downlink Shared Channel, PDSCH), and the physical channel is used to indicate whether the transmission resource of the downlink data includes the at least one of the synchronization signal and the second system information. For example, the PDCCH is used to indicate whether a subframe of the downlink data includes at least one of a synchronization signal and a MIB.

In this embodiment of the present invention, the second system information and the first system information may be the same or different.

The receiving, based on whether the transmission resource includes the at least one of the synchronization signal and the second system information, downlink data sent by the network device means: if the transmission resource includes the synchronization signal or the second system information, downlink data of the remaining transmission resource obtained by deducting the transmission resource corresponding to the second system information or the synchronization signal is decoded; or if the transmission resource does not include the synchronization signal or the second system information, the terminal device attempts to decode and receive the downlink data on all downlink transmission resources.

Optionally, the physical channel and the transmission resource of the downlink data are located in a same serving cell, or are located in different serving cells, or are corresponding to different subcarrier spacing types, or are corresponding to different transmission time interval (Transmission Time Interval, TTI) types.

Alternatively, optionally, the physical channel is used to indicate a transmission resource of downlink data, and the physical channel may include any one of self-scheduling (which may be construed as a case in which the physical channel and a physical channel carrying the downlink data are located in a same cell), cross-carrier scheduling (which may be construed as a case in which the physical channel and a physical channel carrying the downlink data are located in different cells), cross-subcarrier type scheduling (which may be construed as a case in which the physical channel and a physical channel carrying the downlink data are located in different subcarrier spacing types of a same cell).

Optionally, in an embodiment, the method 200 may further include:
obtaining, by the terminal device, a second indication sent by the network device, where the second indication is used to notify that the system information changes, the second indication is further used to indicate first time information, and the first time information includes at least one of a time start location and time length information;
determining, by the terminal device, a second resource based on the first resource and at least one of the time start location and the time length information; and
receiving, by the terminal device, updated system information by using the second resource.

Specifically, the terminal device may receive the second indication (for example, a paging (paging) message) sent by the network device. The second indication is used to notify the terminal device that the system information changes, and is further used to indicate the first time information. The first time information is location change information of a subframe of the system information. The terminal device selectively starts to receive a downlink signal and obtain the system information at a corresponding time domain location based on the first time information, so as to achieve power saving. The first time information may include at least one of a time start location and time length information, for example, information such as a subframe offset (subframe offset), a subframe quantity, or a subframe length. After obtaining the first time information, the terminal device may determine the second resource based on the first resource described above. It may be construed as a case in which the terminal device determines the second resource based on the first indication and the second indication, and receives the updated system information by using the second resource.

During specific implementation, the "second indication" may be construed as a system information changing mechanism, and may be applied to a process in which "the network device pages the terminal device" during specific implementation. For example, the second indication may be a paging message sent by the network device to the terminal device. The terminal device determines a final subframe location (for example, the second resource) of the system information based on the paging message and the first indication (for example, the common indication channel).

It should be understood that in this embodiment of the present invention, the number "first" or "second" is merely introduced to distinguish between different objects such as different "indications" or different "resources", and constitutes no limitation on the present invention.

Optionally, to notify the terminal device that the terminal device is called or that the system message changes, the network device may determine a paging time period, namely, a paging start moment and duration, based on an identifier of the terminal device that is sent by a core network device. Optionally, the duration may be notified to the terminal device through system message broadcast, or may be pre-specified in the protocol, or may be carried in the paging message and notified to the terminal device. For example, the duration may be a quantity of some consecutive subframes. Optionally, after performing LBT to obtain a channel, the network device may send the paging message in at least one time unit in the paging time period. The paging message carries an identifier of the core network device of the terminal device.

The terminal device determines the paging start moment based on the identifier of the terminal device, determines the duration based on the system information, the paging message, or a protocol specification, and receives the paging message in the determined paging time period. It is determined, based on an identification field of the terminal device in the paging message, whether a paging response needs to be initiated, and the paging response may be construed as a service request or whether the system information needs to be updated.

Optionally, in an embodiment, S220 may further include:
starting, by the terminal device, a first timer, where duration of the first timer is preconfigured in a protocol, and receiving the first system information on the first resource during running of the first timer.

The method 200 may further include:
performing, by the terminal device, cell reselection if the terminal device does not receive the first system information after the first timer times out.

Specifically, the terminal device may introduce the first timer, and receive the first system information during running of the first timer. If the terminal device does not receive the first system information after the first timer times out, the terminal device may perform cell reselection, to re-camp on a cell. Herein, duration of the first timer may be preconfigured in the protocol. A configuration of the duration of the first timer may vary with a type of the system information. The type of the system message may be related to the service SI, particular-function SI, or the common SI.

Therefore, according to the data transmission method in this embodiment of the present invention, the terminal device obtains the first indication. The first indication is used to indicate the first resource, and the first resource is used by the network device to send the first system information on the unlicensed spectrum. Then, the terminal device receives the first system information on the unlicensed spectrum by using the first resource. Therefore, the system information can be flexibly broadcast, so as to adapt to a cell service in real time. Further, the first timer is set, so that the terminal device performs cell reselection at a proper moment, thereby preventing service experience from being affected because the terminal device does not receive the SI for a long time.

Optionally, the present invention further provides another embodiment. In a random access process after system information of a basic parameter configuration (a preamble root sequence, a maximum quantity of preamble sending times, a power ramp step, or the like) of random access is obtained, the embodiment is mainly applied to a non-contention based random access process, to implement uplink synchronization, and may specifically include:

The terminal device receives a third indication sent by the network device. The third indication is used to allocate a random access preamble sequence number index, and the third indication is scrambled by the network device by using a cell identifier C-RNTI of the terminal device or a cell identifier of a terminal device group.

The terminal device receives a fourth indication sent by the network device. The fourth indication is used to indicate a random access resource such as a time domain resource or a time-frequency resource. Optionally, the fourth indication may be further used to indicate a subcarrier spacing type or a preamble sequence format of the random access resource. The fourth indication is scrambled by the network device by using a public identifier specified in the protocol, a cell identifier of a terminal device group, or a cell identifier C-RNTI of the terminal device.

The terminal device sends a preamble (preamble) sequence to the network device based on the third indication and the fourth indication. The preamble sequence is used by the network device to calculate an uplink timing advance of the terminal device. If for an unlicensed cell, the terminal device needs to obtain an unlicensed channel (channel) before sending the preamble sequence, the embodiment specifically further includes: The terminal device shares a transmit opportunity of the network device during sending of the fourth indication, chooses to use an idle channel detection mechanism of a particular time length, for example, 25-millisecond LBT, and does not need to perform a backoff-based idle channel detection mechanism. If it is detected that the channel is idle, for example, 25-millisecond LBT within a particular time, or signal strength on the unlicensed channel is less than a threshold within a particular time, the terminal device sends the preamble sequence to the network device. The threshold may be pre-specified in the protocol, or may be notified to the terminal device through broadcasting/unicasting by using the system information.

The terminal device receives a random access response (Random Access Response, RAR) message sent by the network device. Content of the random access response message includes at least one of an uplink timing advance (used to notify the terminal device of uplink synchronization), a cell temporary identifier of a terminal, and a first uplink transmission resource (for example, a frequency domain resource or a size of a physical resource block). Optionally, the first uplink transmission resource may further indicate a first time offset. Specifically, the terminal device receives the RAR based on a random access radio network temporary identifier (Random Access Radio Network Temporary Identity, RA-RNTI). The random access radio network temporary identifier is calculated by the terminal device based on the random access resource of the fourth indication, or is indicated by the network device to the terminal device, for example, the third indication.

The terminal device generates first data based on the first uplink transmission resource, and sends the first data to the network device. Specifically, the terminal device receives a fifth indication sent by the network device. The fifth indication is used to indicate a first time. The terminal device sends the first data in the first time based on the fifth indication. Alternatively, the terminal device determines a second time based on the first time of the fifth indication and the first time offset of the first uplink transmission resource, and sends the first data in the second time. The first time and the second time each may be a moment or a time period such as a subframe, a slot, or a transmission time interval TTI.

Optionally, the present invention further provides another embodiment. A data transmission process may specifically include: The terminal device may receive configuration information. The configuration information is used to configure a period of uplink semi-persistent scheduling, and the semi-persistent scheduling means that the network device needs to allocate only one uplink resource, and configures a scheduling period. The terminal device periodically performs uplink transmission based on the uplink resource and the scheduling period, and does not need to wait for an additional uplink resource. The configuration information may be configured by using an RRC message. In addition, the terminal device may further receive indication information, and the indication information is used to indicate an uplink transmission resource (for example, a frequency domain resource or a time domain resource) of the semi-persistent scheduling. The terminal device may perform uplink initial transmission in a subframe indicated by the indication information, and then perform periodic initial transmission of uplink new data based on the indication information and a period configured in the configuration information. Specifically, the terminal device generates a new piece of first data such as a MAC protocol data unit (Protocol Data Unit, PDU) each time uplink initial transmission is performed. It may be further construed as a case in which a different piece of data is generated each time periodic initial transmission is performed, and the first data is sent to a base station. Optionally, the terminal device may start a second timer and stop a third timer when performing uplink initial transmission, and start the third timer after the second timer times out. The third timer is used by the terminal device to wait for possible uplink retransmission resource for the first data. Optionally, a terminal device having only one HARQ process hybrid automatic repeat request process may stop the third timer when performing uplink initial transmission. The third timer may be any one of a downlink retransmission timer (retransmission timer), an uplink retransmission timer UL retransmission timer, an in-activity timer (in-activity timer), and an on-duration timer (on-duration timer). The downlink retransmission timer is configured to wait for possible downlink retransmission data. The uplink retransmission timer is configured to wait for a possible uplink retransmission grant (grant) resource. The in-activity timer is started or restarted after the PDCCH indicates one retransmission, and is configured to wait for a possible uplink grant. The on-duration timer is configured to maintain a periodic wakeup state, to listen to the PDCCH.

It should be understood that the "first data" herein is usually data when uplink initial transmission is performed, and constitutes no limitation on this embodiment of the present invention.

For example, the second timer may be an uplink round trip time timer (Uplink Round Trip Time Timer, UL RTT Timer). The terminal device starts the UL RTT timer during the uplink initial transmission. After the UL RTT timer times out, the terminal device may start the uplink retransmission timer UL retransmission timer, and may wait for a retransmission grant resource of the first data for the uplink initial transmission during the UL retransmission timer.

For another example, the second timer may be a discontinuous reception in-activity timer (DRX Inactivity Timer) or another timer at a MAC layer or an RRC layer.

Therefore, the terminal device may listen to a downlink control channel based on the third timer, to wait for a possible uplink retransmission resource.

Optionally, the present invention further provides another embodiment. A random access process may specifically include: The terminal device sends a preamble sequence Msg1 to the network device, so that the network device calculates an uplink advance of the terminal device. The network device sends a random access response message Msg2 to the terminal device, and the random access response message may include information such as an uplink advance, an uplink transmission resource, and a temporary identifier. The terminal device may start to send a Msg3 in an indicated subframe based on the uplink transmission resource, and start the second timer. The Msg3 may be used to indicate an identity of the terminal device to the network device, and the Msg3 may include a C-RNTI, an RRC message, and the like. Optionally, if the Msg3 needs to be repeatedly sent for a plurality of times (where different redundancy versions may be used), the second timer is started when the Msg3 is sent for the last time. The second timer is configured to wait for a Msg4, and the Msg4 is used by the network device to notify the terminal device that random access contention succeeds. A first time zone is introduced herein, and the first time zone is a time zone obtained by deducting a time for sending the Msg3 from a running time of the second timer. The terminal device listens to the PDCCH in the first time zone, to receive a contention resolution message. Optionally, there is also a retransmission grant of the Msg3 in the first time zone that can be received. The terminal device may not need to listen to the PDCCH both during sending of the Msg3 and during repeated sending of the Msg3.

Optionally, after receiving a retransmission grant resource of the Msg3 in the first time zone, the terminal device may stop the second timer and start the third timer. After the third timer times out, the terminal device restarts the second timer, and listens to the PDCCH during running of the second timer, to obtain the contention resolution message. The terminal device may not need to listen to the PDCCH during running of the third timer.

Alternatively, optionally, the terminal device may pause the second timer after receiving the retransmission grant of the Msg3 in the first time zone. After completing sending of the Msg3 or repeatedly sending the Msg3 for the last time, the terminal device may resume the second timer, and listen to the PDCCH within the second timer, to obtain the contention resolution message. Certainly, a pause time of the second timer is not included in total duration of the second timer. The terminal device listens to the PDCCH during running of the second timer instead of the pause period, to obtain the contention resolution message.

Herein, the terminal device may introduce the first time zone to listen to the PDCCH, to receive the contention resolution message.

In all the embodiments of the present invention, the PDCCH is a channel for sending control signaling, and other names are not limited.

The data transmission method in this embodiment of the present invention is described above from a terminal device side. The following describes a data transmission method according to an embodiment of the present invention from a network device side.

FIG. 3 is a schematic flowchart of a data transmission method 300 according to an embodiment of the present invention. The method 300 may be performed by a network device. For example, the network device may be the base station 21 in FIG. 1. For brevity, some concepts or terms for the network device side that are the same as those for the terminal device side are not described in detail. As shown in FIG. 3, the method 300 includes the following steps:

S310. The network device obtains a first indication, where the first indication is used to indicate a first resource.

S320. The network device sends first system information to a terminal device on an unlicensed spectrum by using the first resource.

In this embodiment of the present invention, the network device may obtain the first indication, and the first indication is used to indicate the first resource. The network device may send the first system information to the terminal device on the unlicensed spectrum by using the first resource, so that the terminal device receives the first system information on the unlicensed spectrum by using the first resource. Therefore, the system information can be flexibly broadcast, so as to adapt to a cell service in real time.

Optionally, the method 300 may further include:
receiving, by the network device, request information sent by the terminal device, where the request information is used by the terminal device to request the first system information.

S320 may include:
sending, by the network device, the first system information to the terminal device on the first resource based on the request information.

Optionally, the method 300 may further include:
sending, by the network device, a synchronization signal to the terminal device in any subframe.

Herein, the network device may not necessarily send the synchronization signal in a subframe 0 or a subframe 5, but may flexibly send the synchronization signal in any subframe. This is not limited.

Optionally, the method 300 may further include:
sending, by the network device, a physical channel to the terminal device, where the physical channel is used to indicate whether a transmission resource of downlink data includes at least one of a synchronization signal and second system information.

Optionally, the method 300 may further include:
sending, by the network device, a second indication to the terminal device, where the second indication is used to indicate first time information, the first time information includes at least one of a time start location and time length information, and the first time information is used by the terminal device to determine a second resource; and
sending, by the network device, updated system information by using the second resource.

Optionally, the first indication is sent to the terminal device by using a preconfigured scheme, and the preconfigured scheme includes at least one of a preset modulation and coding scheme, a preset time domain resource location, a preset frequency domain resource location, and a preset subcarrier spacing. For example, the first indication is sent by using at least one of a fixed modulation and coding scheme and a fixed time-frequency domain resource location; or the first indication is sent by using at least one of a dynamic modulation and coding scheme and a dynamic time-frequency domain resource location.

Therefore, the network device determines the first indication, and the first indication is used to indicate the first resource. The network device sends the system information to the terminal device on the first resource, so that the terminal device receives the system information on the unlicensed spectrum by using the first resource. Therefore, the system information can be flexibly broadcast, so as to adapt to a cell service in real time.

The data transmission method in the embodiments of the present invention is described above. The following describes a terminal device and a network device according to an embodiment of the present invention.

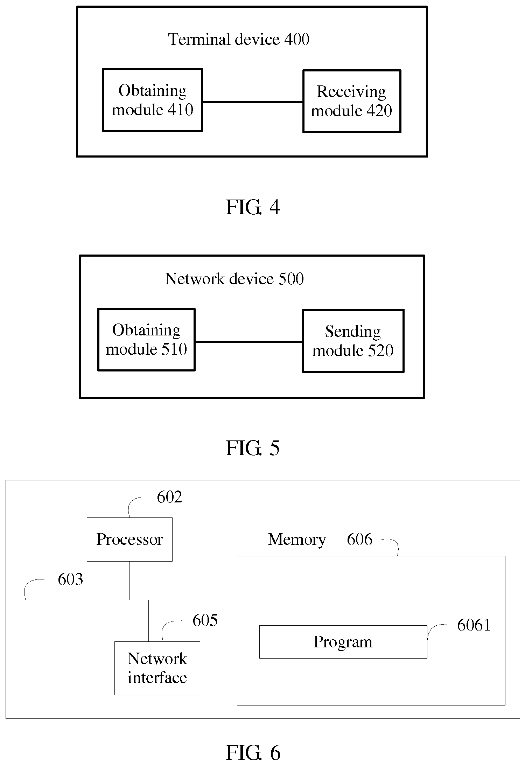

FIG. 4 is a schematic block diagram of a terminal device 400 according to an embodiment of the present invention. The terminal device 400 may perform the method 200 for transmitting data in the embodiments of the present invention. As shown in FIG. 4, the terminal device 400 includes:
an obtaining module 410, configured to obtain a first indication from a network device, where the first indication is used to indicate a first resource, and the first resource is used for the network device to send first system information on an unlicensed spectrum; and
a receiving module 420, configured to receive the first system information on the unlicensed spectrum by using the first resource obtained by the obtaining module 410.

In this embodiment of the present invention, the terminal device 400 obtains the first indication, where the first indication is used to indicate the first resource, and the first resource is used for the network device to send system information, and receives the system information on the first resource, so that the system information can be flexibly broadcast, thereby adapting to a cell service in real time.

Optionally, an offset between a time unit corresponding to the first indication and a time unit corresponding to the first system information is an integer greater than or equal to 0.

Optionally, the first indication is further used to indicate first information, and the first information is used to notify the terminal device that the first system information required by the terminal device exists.

Optionally, the terminal device 400 further includes:
a sending module, configured to send request information to the network device, where the request information is used to request the first system information.

The receiving module 420 is specifically configured to:
receive, on the first resource, the first system information sent by the network device based on the request information.

Optionally, the receiving module 420 is further configured to:
receive a physical channel, where the physical channel is used to indicate whether there is at least one of a synchronization signal and second system information on a transmission resource of downlink data; and
receive, based on whether the transmission resource includes the at least one of the synchronization signal and the second system information, downlink data sent by the network device.

Optionally, the obtaining module 410 is further configured to:
obtain a second indication sent by the network device, where the second indication is used to indicate first time information, and the first time information includes at least one of a time start position and time length information.

The terminal device further includes:
a determining module, configured to determine a second resource based on the first resource and at least one of the time start position and the time length information.

The receiving module 420 is further configured to receive updated system information by using the second resource.

Optionally, the receiving module 420 is specifically configured to:
start a first timer, and receive the first system information on the first resource during running of the first timer.

The terminal device 400 further includes:
a processing module, configured to perform cell reselection if the first system information is not received after the first timer times out.

The terminal device 400 shown in FIG. 4 can implement various processed implemented by the terminal device in the foregoing embodiment. In a specific product implementation, the sending module may be a transmitter, the receiving module may be a receiver, and the obtaining module, the determining module, and another functional module having processing and determining actions may be completed by at least one processor. To avoid repetition, details are not described herein again.

Therefore, the terminal device 400 obtains the first indication, where the first indication is used to indicate the first resource, and the first resource is used for the network device to send system information, and receives the system information on the first resource, so that the system information can be flexibly broadcast, thereby adapting to a cell service in real time.

FIG. 5 is a schematic block diagram of a network device 500 according to an embodiment of the present invention. The network device 500 may perform the method 300 for transmitting data in the embodiments of the present invention. As shown in FIG. 5, the network device 500 includes:
an obtaining module 510, configured to obtain a first indication, where the first indication is used to indicate a first resource; and
a sending module 520, configured to send first system information to a terminal device on an unlicensed spectrum by using the first resource.

In this embodiment of the present invention, the network device 500 can obtain the first indication, where the first indication is used to indicate the first resource, and send the first system information to the terminal device on the unlicensed spectrum by using the first resource, so that the terminal device receives the first system information on the first resource, and the system information can be flexibly broadcast, thereby adapting to a cell service in real time.

Optionally, the network device further includes:
a receiving module, configured to receive request information sent by the terminal device, where the request information is used for the terminal device to request the first system information.

The sending module 520 is specifically configured to:
send the first system information to the terminal device on the first resource based on the request information.

Optionally, the sending module 520 is further configured to:
send a physical channel to the terminal device, where the physical channel is used to indicate whether there is at least one of a synchronization signal and second system information on a transmission resource of downlink data.

Optionally, the sending module 520 is further configured to:
send a second indication to the terminal device, where the second indication is used to indicate first time information, the first time information includes at least one of a time start position and time length information, and the first time information is used for the terminal device to determine a second resource; and
send updated system information by using the second resource.

The network device 500 shown in FIG. 5 can implement various processed implemented by the network device in the foregoing embodiment. In a specific product implementation, the sending module may be a transmitter, the receiving module may be a receiver, and the obtaining module and another processing action may be completed by at least one processor. To avoid repetition, details are not described herein again.

Therefore, the network device 500 can obtain the first indication, where the first indication is used to indicate the first resource, and send the first system information to the terminal device on the unlicensed spectrum by using the first resource, so that the terminal device receives the first system information on the first resource, and the system information can be flexibly broadcast, thereby adapting to a cell service in real time.

FIG. 6 shows a structure of apparatuses of a terminal device according to still another embodiment of the present invention, including at least one processor 602 (for example, a CPU), at least one network interface 605 or another communications interface, a memory 606, and at least one communications bus 603, configured to implement connection and communication between these apparatuses. The processor 602 is configured to execute an executable module stored in the memory 606, for example, a computer program. The memory 606 may include a high speed random access memory (RAM: Random Access Memory), or may further include a non-volatile memory (non-volatile memory), for example, at least one magnetic disk memory. The at least one network interface 605 (which may be wired or wireless) is used to implement a communication connection to at least one other network element.

In some implementations, the memory 606 stores a program 6061, and the processor 602 executes the program 7061, to perform the method on a side of the terminal device in the foregoing embodiment of the present invention.

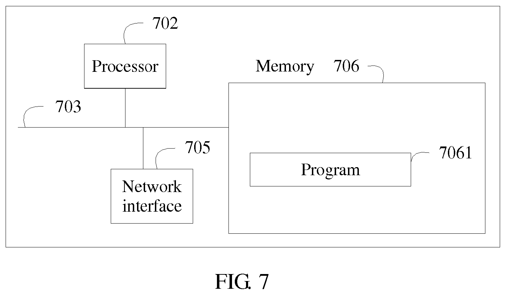

FIG. 7 shows a structure of apparatuses of a network device according to still another embodiment of the present invention, including at least one processor 702 (for example, a CPU), at least one network interface 705 or another communications interface, a memory 706, and at least one communications bus 703, configured to implement connection and communication between these apparatuses. The processor 702 is configured to execute an executable module stored in the memory 706, for example, a computer program. The memory 706 may include a high speed random access memory (RAM: Random Access Memory), or may further include a non-volatile memory (non-volatile memory), for example, at least one magnetic disk memory. The at least one network interface 705 (which may be wired or wireless) is used to implement a communication connection to at least one other network element.

In some implementations, the memory 706 stores a program 7061, and the processor 702 executes the program 7061, to perform the method on a side of the network device in the foregoing embodiment of the present invention.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A data transmission method, comprising:
obtaining (S210), by a terminal device (400), a first indication from a network device (500), wherein the first indication indicates a first resource, and the first resource is used for a transmission of first system information on an unlicensed spectrum; and
receiving (S220), by the terminal device (400), the first system information on the unlicensed spectrum by using the first resource;
wherein the method further comprises:
sending, by the terminal device (400), request information to the network device (500), wherein the request information is used to request the first system information; and
the receiving (S220), by the terminal device (400), the first system information on the first resource comprises:
receiving, by the terminal device (400) on the first resource, the first system information sent by the network device (500) based on the request information;
**characterized in that** receiving (S220), by the terminal device (400), the system information on the first resource comprises:
starting, by the terminal device (400), a first timer, and attempting to receive the first system information on the first resource during running of the first timer; and
the method further comprises: performing, by the terminal device (400), cell reselection after the first timer times out if the terminal device (400) does not receive the first system information.

2. The method according to claim 1, wherein an offset between a time unit corresponding to the first indication and a time unit corresponding to the first system information is an integer greater than or equal to 0.

3. The method according to claim 1 or 2, wherein the first indication further indicates first information, and the first information is used to notify the terminal device (400) that the first system information required by the terminal device (400) exists.

4. The method according to any one of claims 1 to 3, wherein the method further comprises:
receiving, by the terminal device (400), a physical channel, wherein the physical channel is used to indicate whether a transmission resource of downlink data comprises at least one of a synchronization signal and second system information; and
receiving, based on whether the transmission resource comprises the at least one of the synchronization signal and the second system information, downlink data sent by the network device (500).

5. The method according to any one of claims 1 to 4, wherein after the obtaining (S210), by a terminal device (400), a first indication from a network device (500), the method further comprises:
obtaining, by the terminal device (400), a second indication sent by the network device (500), wherein the second indication is used to indicate first time information, and the first time information comprises at least one of a time start location and time length information;
determining, by the terminal device (400), a second resource based on the first resource and at least one of the time start location and the time length information; and
receiving, by the terminal device (400), updated system information by using the second resource.

6. The method according to any one of claims 1 to 5, wherein the first indication is sent by using a preconfigured scheme, and the preconfigured scheme comprises at least one of a preset modulation and coding scheme, a preset time domain resource location, a preset frequency domain resource location, and a preset subcarrier spacing type.

7. A terminal device (400), comprising:
an obtaining module (410), configured to obtain a first indication from a network device (500), wherein the first indication indicates a first resource, and the first resource is for a transmission of first system information on an unlicensed spectrum; and
a receiving module (420), configured to receive the first system information on the unlicensed spectrum by using the first resource obtained by the obtaining module (410);
wherein the terminal device (400) further comprises:
a sending module, configured to send request information to the network device (500), wherein the request information is used to request the first system information; and
the receiving module (420) is configured to:
receive, on the first resource, the first system information sent by the network device (500) based on the request information;
**characterized in that** the receiving module (420) is configured to:
start a first timer, and attempt to receive the first system information on the first resource during running of the first timer; and
the terminal device (400) further comprises:
a processing module, configured to perform cell reselection after the first timer times out if the first system information is not received.

8. The terminal device (400) according to claim 7, wherein an offset between a time unit corresponding to the first indication and a time unit corresponding to the first system information is an integer greater than or equal to 0.

9. The terminal device (400) according to claim 7 or 8, wherein the first indication further indicates first information, and the first information is used to notify the terminal device (400) that the first system information required by the terminal device (400) exists.

10. The terminal device (400) according to any one of claims 7 to 9, wherein the receiving module (420) is further configured to:
receive a physical channel, wherein the physical channel is used to indicate whether a transmission resource of downlink data comprises at least one of a synchronization signal and second system information; and
receive, based on whether the transmission resource comprises the at least one of the synchronization signal and the second system information, downlink data sent by the network device (500).

11. The terminal device (400) according to any one of claims 7 to 10, wherein the obtaining module (410) is further configured to:
obtain a second indication sent by the network device (500), wherein the second indication is used to indicate first time information, and the first time information comprises at least one of a time start location and time length information;
the terminal device (400) further comprises:
a determining module, configured to determine a second resource based on the first resource and at least one of the time start location and the time length information; and
the receiving module (420) is further configured to receive updated system information by using the second resource.

12. The terminal device (400) according to any one of claims 7 to 11, wherein the first indication is sent by using a preconfigured scheme, and the preconfigured scheme comprises at least one of a preset modulation and coding scheme, a preset time domain resource location, a preset frequency domain resource location, and a preset subcarrier spacing type.

## Patentansprüche

1. Datenübertragungsverfahren, umfassend:
Erlangen (S210) einer ersten Angabe von einer Netzwerkvorrichtung (500) durch eine Endgerätevorrichtung (400), wobei die erste Angabe eine erste Ressource angibt und die erste Ressource für eine Übertragung von ersten Systeminformationen in einem lizenzfreien Spektrum verwendet wird; und
Empfangen (S220) der ersten Systeminformationen durch die Endgerätevorrichtung (400) auf dem lizenzfreien Spektrum unter Verwendung der ersten Ressource;
wobei das Verfahren ferner Folgendes umfasst:
Senden von Anforderungsinformationen durch die Endgerätevorrichtung (400) an die Netzwerkvorrichtung (500), wobei die Anforderungsinformationen verwendet werden, um die ersten Systeminformationen anzufordern; und
wobei das Empfangen (S220) der ersten Systeminformationen auf der ersten Ressource durch die Endgerätevorrichtung (400) Folgendes umfasst:
Empfangen der ersten Systeminformationen, die durch die Netzwerkvorrichtung (500) basierend auf den Anforderungsinformationen gesendet werden, durch die Endgerätevorrichtung (400) auf der ersten Ressource;
**dadurch gekennzeichnet, dass** das Empfangen (S220) der Systeminformationen auf der ersten Ressource durch die Endgerätevorrichtung (400) Folgendes umfasst:
Starten eines ersten Zeitgebers durch die Endgerätevorrichtung (400) und Versuchen, die ersten Systeminformationen auf der ersten Ressource während des Ausführens des ersten Zeitgebers zu empfangen; und
wobei das Verfahren ferner Folgendes umfasst:
Durchführen einer Zellenneuauswahl durch die Endgerätevorrichtung (400) nach Ablauf des ersten Zeitgebers, wenn die Endgerätevorrichtung (400) die ersten Systeminformationen nicht empfängt.

2. Verfahren nach Anspruch 1, wobei ein Versatz zwischen einer Zeiteinheit, die der ersten Angabe entspricht, und einer Zeiteinheit, die den ersten Systeminformationen entspricht, eine ganze Zahl größer oder gleich 0 ist.

3. Verfahren nach Anspruch 1 oder 2, wobei die erste Angabe ferner erste Informationen angibt und die ersten Informationen verwendet werden, um die Endgerätevorrichtung (400) zu benachrichtigen, dass die durch die Endgerätevorrichtung (400) benötigten ersten Systeminformationen vorhanden sind.

4. Verfahren nach einem der Ansprüche 1 bis 3, wobei das Verfahren ferner Folgendes umfasst:
Empfangen eines physikalischen Kanals durch die Endgerätevorrichtung (400), wobei der physikalische Kanal verwendet wird, um anzugeben, ob eine Übertragungsressource von Downlink-Daten mindestens eines von einem Synchronisationssignal und zweiten Systeminformationen umfasst; und
Empfangen von durch die Netzwerkvorrichtung (500) gesendeten Downlink-Daten basierend darauf, ob die Übertragungsressource das mindestens eine von dem Synchronisationssignal und den zweiten Systeminformationen umfasst.

5. Verfahren nach einem der Ansprüche 1 bis 4, wobei nach dem Erlangen (S210) einer ersten Angabe von einer Netzwerkvorrichtung (500) durch eine Endgerätevorrichtung (400) das Verfahren ferner Folgendes umfasst:
Erlangen einer durch die Netzwerkvorrichtung (500) gesendeten zweiten Angabe durch die Endgerätevorrichtung (400), wobei die zweite Angabe verwendet wird, um erste Zeitinformationen anzugeben, und die ersten Zeitinformationen mindestens eines von einem Zeitstartort und einer Zeitlängeninformation umfassen;
Bestimmen einer zweiten Ressource durch die Endgerätevorrichtung (400) basierend auf der ersten Ressource und mindestens einem von dem Zeitstartort und der Zeitlängeninformation; und
Empfangen von aktualisierten Systeminformationen durch die Endgerätevorrichtung (400) unter Verwendung der zweiten Ressource.

6. Verfahren nach einem der Ansprüche 1 bis 5, wobei die erste Angabe unter Verwendung eines vorkonfigurierten Schemas gesendet wird und das vorkonfigurierte Schema mindestens eines von einem voreingestellten Modulations- und Codierungsschema, einem voreingestellten Zeitdomänenressourcenort, einem voreingestellten Frequenzdomänenressourcenort und einem voreingestellten Unterträgerabstandstyp umfasst.

7. Endgerätevorrichtung (400), umfassend:
ein Erlangungsmodul (410), das dazu konfiguriert ist, eine erste Angabe von einer Netzwerkvorrichtung (500) zu erlangen, wobei die erste Angabe eine erste Ressource angibt und die erste Ressource zur Übertragung von ersten Systeminformationen auf einem lizenzfreien Spektrum dient; und
ein Empfangsmodul (420), das dazu konfiguriert ist, die ersten Systeminformationen auf dem lizenzfreien Spektrum unter Verwendung der durch das Erlangungsmodul (410) erlangten ersten Ressource zu empfangen;
wobei die Endgerätevorrichtung (400) ferner Folgendes umfasst:
ein Sendemodul, das dazu konfiguriert ist, Anforderungsinformationen an die Netzwerkvorrichtung (500) zu senden, wobei die Anforderungsinformationen verwendet werden, um die ersten Systeminformationen anzufordern; und
wobei das Empfangsmodul (420) zu Folgendem konfiguriert ist:
Empfangen der ersten Systeminformationen, die durch die Netzwerkvorrichtung (500) basierend auf den Anforderungsinformationen gesendet werden, auf der ersten Ressource;
**dadurch gekennzeichnet, dass** das Empfangsmodul (420) zu Folgendem konfiguriert ist:
Starten eines ersten Zeitgebers und Versuchen, die ersten Systeminformationen auf ersten Ressource während der Ausführung des ersten Zeitgebers zu empfangen; und
wobei die Endgerätevorrichtung (400) ferner Folgendes umfasst:
ein Verarbeitungsmodul, das dazu konfiguriert ist, eine Zellenneuauswahl nach Ablauf des ersten Zeitgebers durchzuführen, wenn die ersten Systeminformationen nicht empfangen werden.

8. Endgerätevorrichtung (400) nach Anspruch 7, wobei ein Versatz zwischen einer Zeiteinheit, die der ersten Angabe entspricht, und einer Zeiteinheit, die den ersten Systeminformationen entspricht, eine ganze Zahl größer oder gleich 0 ist.

9. Endgerätevorrichtung (400) nach Anspruch 7 oder 8, wobei die erste Angabe ferner erste Informationen angibt und die ersten Informationen verwendet werden, um die Endgerätevorrichtung (400) zu benachrichtigen, dass die durch die Endgerätevorrichtung (400) benötigten ersten Systeminformationen vorhanden sind.

10. Endgerätevorrichtung (400) nach einem der Ansprüche 7 bis 9, wobei das Empfangsmodul (420) ferner zu Folgendem konfiguriert ist:
Empfangen eines physikalischen Kanals, wobei der physikalische Kanal verwendet wird, um anzugeben, ob eine Übertragungsressource von Downlink-Daten mindestens eines von einem Synchronisationssignal und zweiten Systeminformationen umfasst; und
Empfangen von durch die Netzwerkvorrichtung (500) gesendeten Downlink-Daten basierend darauf, ob die Übertragungsressource das mindestens eine von dem Synchronisationssignal und den zweiten Systeminformationen umfasst.

11. Endgerätevorrichtung (400) nach einem der Ansprüche 7 bis 10, wobei das Erlangungsmodul (410) ferner zu Folgendem konfiguriert ist:
Erlangen einer durch die Netzwerkvorrichtung (500) gesendeten zweiten Angabe, wobei die zweite Angabe verwendet wird, um erste Zeitinformationen anzugeben, und die ersten Zeitinformationen mindestens eines von einem Zeitstartort und einer Zeitlängeninformation umfassen;
wobei die Endgerätevorrichtung (400) ferner Folgendes umfasst:
ein Bestimmungsmodul, das dazu konfiguriert ist, eine zweite Ressource basierend auf der ersten Ressource und mindestens einem von dem Zeitstartort und der Zeitlängeninformation zu bestimmen; und
wobei das Empfangsmodul (420) ferner dazu konfiguriert ist, aktualisierte Systeminformationen unter Verwendung der zweiten Ressource zu empfangen.

12. Endgerätevorrichtung (400) nach einem der Ansprüche 7 bis 11, wobei die erste Angabe unter Verwendung eines vorkonfigurierten Schemas gesendet wird und das vorkonfigurierte Schema mindestens eines von einem voreingestellten Modulations- und Codierungsschema, einem voreingestellten Zeitdomänenressourcenort, einem voreingestellten Frequenzdomänenressourcenort und einem voreingestellten Unterträgerabstandstyp umfasst.

## Revendications

1. Procédé de transmission de données, comprenant :
l'obtention (S210), par un dispositif terminal (400), d'une première indication d'un dispositif de réseau (500), dans lequel la première indication indique une première ressource, et la première ressource est utilisée pour une transmission de premières informations système sur un spectre sans licence ; et
la réception (S220), par le dispositif terminal (400), des premières informations système sur le spectre sans licence à l'aide de la première ressource ;
dans lequel le procédé comprend en outre :
l'envoi, par le dispositif terminal (400), d'informations de demande au dispositif de réseau (500), dans lequel les informations de demande sont utilisées pour demander les premières informations système ; et
la réception (S220), par le dispositif terminal (400), des premières informations système sur la première ressource comprend :
la réception, par le dispositif terminal (400) sur la première ressource, des premières informations système envoyées par le dispositif de réseau (500) sur la base des informations de demande ;
**caractérisé en ce que** la réception (S220), par le dispositif terminal (400), des informations système sur la première ressource comprend :
le démarrage, par le dispositif terminal (400), d'un premier minuteur et le fait de tenter de recevoir les premières informations système sur la première ressource pendant le fonctionnement du premier minuteur ; et
le procédé comprend en outre :
l'exécution, par le dispositif terminal (400), d'une resélection de cellule après l'arrêt du premier minuteur si le dispositif terminal (400) ne reçoit pas les premières informations système.

2. Procédé selon la revendication 1, dans lequel un décalage entre une unité de temps correspondant à la première indication et une unité de temps correspondant aux premières informations système est un entier supérieur ou égal à 0.

3. Procédé selon la revendication 1 ou 2, dans lequel la première indication indique en outre des premières informations, et les premières informations sont utilisées pour notifier au dispositif terminal (400) que les premières informations système requises par le dispositif terminal (400) existent.

4. Procédé selon l'une quelconque des revendications 1 à 3, dans lequel le procédé comprend en outre :
la réception, par le dispositif terminal (400), d'un canal physique, dans lequel le canal physique est utilisé pour indiquer si une ressource de transmission de données de liaison descendante comprend au moins l'un d'un signal de synchronisation et de secondes informations système ; et
la réception, sur la base du fait que la ressource de transmission comprend l'au moins un parmi le signal de synchronisation et les secondes informations système, de données de liaison descendante envoyées par le dispositif de réseau (500) .

5. Procédé selon l'une quelconque des revendications 1 à 4, dans lequel, après l'obtention (S210), par un dispositif terminal (400), d'une première indication à partir d'un dispositif de réseau (500), le procédé comprend en outre :
l'obtention, par le dispositif terminal (400), d'une seconde indication envoyée par le dispositif de réseau (500), dans lequel la seconde indication est utilisée pour indiquer des premières informations temporelles, et les premières informations temporelles comprennent au moins l'un d'un emplacement de début de temps et d'informations de longueur de temps ;
la détermination, par le dispositif terminal (400), d'une seconde ressource sur la base de la première ressource et d'au moins l'un de l'emplacement de début de temps et des informations de longueur de temps ; et
la réception, par le dispositif terminal (400), d'informations système mises à jour à l'aide de la seconde ressource.

6. Procédé selon l'une quelconque des revendications 1 à 5, dans lequel la première indication est envoyée à l'aide d'un schéma préconfiguré, et le schéma préconfiguré comprend au moins l'un d'un schéma de modulation et de codage prédéfini, d'un emplacement de ressource de domaine temporel prédéfini, d'un emplacement de ressource de domaine de fréquence prédéfini et d'un type d'espacement de sous-porteuse prédéfini.

7. Dispositif terminal (400), comprenant :
un module d'obtention (410), configuré pour obtenir une première indication en provenance d'un dispositif de réseau (500), dans lequel la première indication indique une première ressource, et la première ressource est pour une transmission de premières informations système sur un spectre sans licence ; et
un module de réception (420), configuré pour recevoir les premières informations système sur le spectre sans licence à l'aide de la première ressource obtenue par le module d'obtention (410) ;
dans lequel le dispositif terminal (400) comprend en outre :
un module d'envoi, configuré pour envoyer des informations de demande au dispositif de réseau (500), dans lequel les informations de demande sont utilisées pour demander les premières informations système ; et
le module de réception (420) est configuré pour :
recevoir, sur la première ressource, les premières informations système envoyées par le dispositif de réseau (500) sur la base des informations de demande ;
**caractérisé en ce que** le module de réception (420) est configuré pour :
démarrer un premier minuteur et tenter de recevoir les premières informations système sur la première ressource pendant le fonctionnement du premier minuteur ; et
le dispositif terminal (400) comprend en outre :
un module de traitement, configuré pour exécuter une resélection de cellule après l'arrêt du premier minuteur si les premières informations systèmes ne sont pas reçues.

8. Dispositif terminal (400) selon la revendication 7, dans lequel un décalage entre une unité de temps correspondant à la première indication et une unité de temps correspondant aux premières informations système est un entier supérieur ou égal à 0.

9. Dispositif terminal (400) selon la revendication 7 ou 8, dans lequel la première indication indique en outre des premières informations, et les premières informations sont utilisées pour notifier au dispositif terminal (400) que les premières informations système requises par le dispositif terminal (400) existent.

10. Dispositif terminal (400) selon l'une quelconque des revendications 7 à 9, dans lequel le module de réception (420) est en outre configuré pour :
recevoir un canal physique, dans lequel le canal physique est utilisé pour indiquer si une ressource de transmission de données de liaison descendante comprend au moins l'un d'un signal de synchronisation et de secondes informations système ; et
recevoir, sur la base du fait que la ressource de transmission comprend l'au moins un du signal de synchronisation et des secondes informations système, des données de liaison descendante envoyées par le dispositif de réseau (500).

11. Dispositif terminal (400) selon l'une quelconque des revendications 7 à 10, dans lequel le module d'obtention (410) est en outre configuré pour :
obtenir une seconde indication envoyée par le dispositif de réseau (500), dans lequel la seconde indication est utilisée pour indiquer des premières informations temporelles, et les premières informations temporelles comprennent au moins l'un d'un emplacement de début de temps et d'informations de longueur de temps ;
le dispositif terminal (400) comprend en outre :
un module de détermination, configuré pour déterminer une seconde ressource sur la base de la première ressource et d'au moins l'un de l'emplacement de début de temps et des informations de longueur de temps ; et
le module de réception (420) est en outre configuré pour recevoir des informations système mises à jour à l'aide de la seconde ressource.

12. Dispositif terminal (400) selon l'une quelconque des revendications 7 à 11, dans lequel la première indication est envoyée à l'aide d'un schéma préconfiguré, et le schéma préconfiguré comprend au moins l'un d'un schéma de modulation et de codage prédéfini, d'un emplacement de ressource de domaine temporel prédéfini, d'un emplacement de ressource de domaine de fréquence prédéfini et d'un type d'espacement de sous-porteuse prédéfini.
